# EUROPÄISCHE PATENTANMELDUNG

(11) **EP 4 488 665 A1**
(43) Veröffentlichungstag der Anmeldung: **08.01.2025**
(21) Anmeldenummer: 24184660.9
(22) Anmeldetag: 26.06.2024
(51) Int. Cl.: G01N 21/80, G01N 31/22

(54) **STERILISIERBARE OPTOCHEMISCHE SENSORELEMENTE**

(30) Priorität: 27.06.2023 DE 102023116956
(71) Anmelder: PyroScience GmbH, 52072 Aachen (DE)
(72) Erfinder: Staudinger, Christoph, 52064 Aachen (DE); Klimant, Ingo, 52064 Aachen (DE)
(74) Vertreter: Jostarndt Patentanwalts-AG

(57) **Zusammenfassung**

Die Erfindung betrifft optochemische Sensorelemente für optochemische Sensoren, deren Sensorschicht mindestens eine nicht-flüchtigen Substanz enthält, die eine Strahlensterilisation und eine darauffolgende Kalibration ohne flüssiges Kalibrationsmedium ermöglicht sowie ein Verfahren zur Trockenkalibration eines solchen optochemischen Sensorelements.

## Beschreibung

Die Erfindung betrifft optochemische Sensorelemente für optochemische Sensoren, die einen Zusatzstoff enthalten, der die Strahlensterilisation und gleichzeitig eine darauffolgende Kalibration ohne flüssiges Kalibrationsmedium ermöglicht sowie ein Verfahren zur Trockenkalibration eines solchen optochemischen Sensorelements.

Optochemische Sensoren sind Sensoren zur Messung mindestens eines Zustandsparameters eines Analyten, insbesondere der Konzentration oder des Partialdrucks eines Analyten in einem flüssigen oder gasförmigen Medium, unter Verwendung eines optischen Messprinzips. Dabei können optochemische Sensoren für die Anwendung verschiedener optische Messprinzipien wie beispielsweise Reflexion, Absorption und Lumineszenz (Fluoreszenz und Phosphoreszenz) eingesetzt werden. Solche optochemischen Sensoren werden auch als Optroden oder Optoden bezeichnet. Optochemische Sensoren umfassen mindestens eine Lichtquelle zur Emission von Licht, mindestens einem Photodetektor zur Erfassung von Licht und einem meist über einen oder mehrere Lichtleiter mit der Lichtquelle und der Photodetektor verbundenen optochemischen Sensorelement, welches aus einer Sensorschicht, einer Trägerschicht und ggf. weiteren Schichten aufgebaut ist. Die optochemische Sensorschicht enthält einen Indikator, dessen optische Eigenschaften von einem Zustandsparameter des Analyten abhängen. Dabei ist der Indikator in einer Matrix immobilisiert, die in der Regel aus einem Polymer besteht, und diese den Indikator enthaltende Matrix ist in der Regel auf einer Trägerschicht angeordnet. Bei der Trägerschicht handelt es sich um eine transparente, d.h. lichtdurchlässige Folie oder eine dünne Glasschicht, vorzugsweise um eine transparente Kunststofffolie aus einem nicht wasseraufnehmenden Kunststoff, insbesondere eine Folie aus Polyethylenterephthalat (PET), Polyethylennaphthalat (PEN), Polymethylmethacrylat (PMMA), Polycarbonat (PC), Nylon, oder Polystyrol (PS).

Insbesondere beim Einsatz von optochemischen Sensoren in der Medizintechnik und der Biotechnologie ist es erforderlich, die optochemischen Sensorelemente vor der Benutzung zu sterilisieren. Die Sterilisation erfolgt dabei in der Regel mittels hochenergetischer Strahlung, insbesondere mittels Gamma-, Beta- oder Röntgenstrahlung. Während des Prozesses der Strahlungssterilisation von optochemischen Sensoren kommt es jedoch in der Regel zu Zerstörungserscheinungen oder Veränderungen der eingesetzten Materialien. Diese Zerstörungserscheinungen oder Veränderungen sind die Folge von chemischen Reaktionen, die durch Radikale initiiert werden, die während der Bestrahlung entstehen.

Die durch bei der Sterilisation entstehende Radikale hervorgerufenen Zerstörungserscheinungen oder Veränderungen führen auch dazu, dass sich die Kalibrationskurven der optochemischen Sensoren unreproduzierbar verändern, da insbesondere in medizintechnischen und biotechnologischen Prozessen Sensoren nach der Sterilisation nicht mehr mit Kalibrationsmedien in Kontakt gebracht werden können, um Kontaminationen zu vermeiden.

Um die Zerstörungserscheinungen oder Veränderungen bei der Sterilisation zu minimieren ist es zwar grundsätzlich möglich, der Sensorschicht Stabilisatoren zuzusetzen. Bei optochemischen Sensoren, bei denen die Sensorschicht wasser- und Ionendurchlässig ist, können jedoch viele übliche Stabilisatoren nicht eingesetzt werden, da diese häufig toxisch sind und ausgewaschen werden können.

Als Alternative zur Verwendung von Stabilisatoren schlägt die US 2012/0091326 A1 vor, die Sensorelemente von optochemische Sensoren zur Sterilisation gasdicht einzukapseln, und die Menge der entstehenden Radikale zu minimieren. Ein derartiges Vorgehen kann die Degradation des Sensorelements allerdings nicht vollständig verhindern.

Es besteht daher Bedarf an optochemischen Sensorelementen für optochemische Sensoren mit einer Sensorschicht-Zusammensetzung, die durch bei der Sterilisation entstehende Radikale hervorgerufene Zerstörungserscheinungen oder Veränderungen der Sensorschicht weitgehend verhindert und außerdem die Kalibration des optochemischen Sensorelements ohne Kontakt mit einem Kalibrationsmedium ermöglicht.

Aufgabe der Erfindung ist es, optochemische Sensorelemente für optochemische Sensoren bereitzustellen, die durch bei der Sterilisation entstehende Radikale hervorgerufene Zerstörungserscheinungen oder Veränderungen des optochemischen Sensorelements weitgehend verhindern und außerdem die Trockenkalibration des optochemischen Sensorelements ohne Kontakt mit einem Kalibrationsmedium ermöglichen, sowie ein Verfahren zur Trockenkalibration eines solchen optochemischen Sensorelements bereitzustellen.

Erfindungsgemäß wird diese Aufgabe durch ein optochemisches Sensorelement mit den Merkmalen des unabhängigen Anspruches 1 gelöst. Vorteilhafte Weiterbildungen des Verfahrens ergeben sich aus den Unteransprüchen 2-16. Die Aufgabe wird ferner durch einen Optochemischen Sensor gemäß Anspruch 17 und ein Verfahren nach Anspruch 18 gelöst.

Die Sensorschicht des erfindungsgemäßen optochemischen Sensorelements enthält mindestens eine nicht-flüchtige Substanz, die einerseits als Radikalfänger wirken kann, und andererseits das optochemische Sensorelement in einen definierten kalibrationsfähigen Zustand überführt. Vorzugsweise handelt es sich bei der nicht-flüchtigen Substanz um eine nicht-flüchtige Säure, die als Radikalfänger wirken kann, oder ein Salz einer nicht-flüchtigen Säure, die als Radikalfänger wirken kann. Dabei sind die nicht-flüchtige Substanz bzw. die nicht-flüchtige Säure oder das Salz vorzugsweise physiologisch verträglich. Vorzugsweise beträgt der Anteil der nicht-flüchtigen Säure, die als Radikalfänger wirken kann, oder des Salzes einer nicht-flüchtigen Säure, die als Radikalfänger wirken kann, an der Sensorschicht mindestens 5 Gew.-% und insbesondere 10 bis 30 Gew.-%.

Bei Einsatz einer nicht-flüchtigen Säure wird bei optochemischen Sensorelementen für optochemische pH-Sensoren die definierte Menge des Analyten, d.h. in diesem Fall der Wasserstoff-Ionen, durch die Azidität der nicht-flüchtigen Säure bereitgestellt und ermöglicht eine Kalibration ohne Kontakt zur Probe (Einpunkttrockenkalibration) wie weiter unten dargestellt wird. Sofern es sich bei dem optochemischen Sensor um einen Kationen-Sensor handelt, wird bei optochemischen Sensorelementen für den entsprechenden optochemischen Sensor das Salz des zu analysierenden Kations einer nicht-flüchtigen Säure eingesetzt, um die definierte Menge des Analyten bereitzustellen. Besonders bevorzugt handelt es sich bei den erfindungsgemäßen optochemischen Sensorelementen um optochemische Sensorelemente für pH-Sensoren, Kalium-Sensoren, Natrium-Sensoren, Calcium-Sensoren, Magnesium-Sensoren oder Ammonium-Sensoren, wobei optochemische Sensorelemente für pH-Sensoren erfindungsgemäß ganz besonders bevorzugt sind.

Erfindungsgemäß bevorzugt handelt es sich bei der nicht-flüchtigen Säure um Ascorbinsäure, die durch ihre Eigenschaft als Radikalfänger und ihre geringe Toxizität für den Einsatz in Sensorelementen für optochemischen pH-Sensoren für medizintechnische und biotechnologische Prozesse besonders geeignet ist.

Erfindungsgemäß bevorzugt werden als Salze nicht-flüchtiger Säuren Kaliumascorbat, Natriumascorbat, Calciumascorbat, Magnesiumascorbat und Ammoniumascorbat eingesetzt.

Eine weitere bevorzugte Ausführungsformen der Erfindung sind daher optochemische Sensorelemente für optochemische Kalium-Sensoren, die als Salz einer nicht-flüchtigen Säure Kaliumascorbat enthalten, optochemische Sensorelemente für optochemische Natrium-Sensoren, die als Salz einer nicht-flüchtigen Säure Natriumascorbat enthalten, optochemische Sensorelemente für optochemische Calcium-Sensoren, die als Salz einer nicht-flüchtigen Säure Calciumascorbat enthalten, optochemische Sensorelemente für optochemische Magnesium-Sensoren, die als Salz einer nicht-flüchtigen Säure Magnesiumascorbat enthalten und optochemische Sensorelemente für optochemische Ammonium-Sensoren, die als Salz einer nicht-flüchtigen Säure Ammoniumascorbat enthalten.

Zur Herstellung der erfindungsgemäßen optochemischen Sensorelemente wird die Trägerschicht mit einer Dispersion der nicht-flüchtigen Substanz, die als Radikalfänger wirken kann, vorzugsweise der nicht-flüchtige Säure, die als Radikalfänger wirken kann, oder des Salzes einer nicht-flüchtigen Säure, die als Radikalfänger wirken kann, in einer Lösung des Matrixmaterials beschichtet, die auch den Indikator in gelöster oder dispergierter Form enthält. Erfindungsgemäß geeignete Lösungsmittel sind insbesondere CHCl₃ oder Toluol oder eine Mischung aus Ethanol und Wasser. Je nach Matrixmaterial könne aber auch andere Lösungsmittel verwendet werden. Der so entstandene Verbund kann nach der Trocknung in an sich bekannter Weise mit einer oder mehreren weiteren Schichten beschichtet werden, vorzugsweise mit einer Streuschicht und/oder einer optischen Isolierschicht. Aus dem entstandenen Verbund werden dann vorzugsweise durch Stanzen optochemische Sensorelemente in einer Größe herausgeschnitten, wie sie zur Herstellung von optochemischen Sensoren benötigt werden. Diese optochemischen Sensorelemente werden zur Herstellung des optochemischen Sensors auf der Stirnfläche eines Lichtleiters verklebt oder verklemmt oder an einem Sensorhalter oder einer Sensorkappe vorzugsweise durch Verkleben befestigt.

Zur Sterilisation der optochemischen Sensorelemente können diese vor der Befestigung auf der Stirnfläche eines Lichtleiters oder an einem Sensorhalter oder einer Sensorkappe in einen üblichen Sterilisator für die Sterilisation mittels hochenergetischer Strahlung, insbesondere mittels Gamma-, Beta- oder Röntgenstrahlung eingebracht und in üblicher, dem Fachmann bekannter Weise sterilisiert werden.

Die erfindungsgemäßen optochemischen Sensorelemente weisen den zusätzlichen Vorteil auf, dass eine Trockenkalibration, vorzugsweise eine Einpunkttrockenkalibration des optochemischen Sensors ohne Kontakt mit einem Kalibrationsmedium möglich ist.

Gegenstand der Erfindung ist daher auch ein Verfahren zur Trockenkalibration eines optochemischen Sensorelements für einen optochemischen pH-, Kalium-, Natrium-, Calcium-, Magnesium- oder Ammonium-Sensor, bei dem die Sensorschicht des optochemischen Sensorelements eine solche Menge im Falle eines pH-Sensors einer nicht-flüchtigen Säure oder im Falle eines Kalium-, Natrium, Calcium, Magnesium oder Ammonium-Sensors von deren Kaliumsalz, Natriumsalz, Calciumsalz, Magnesiumsalz bzw. Ammoniumsalz enthält, dass der Indikator vollständig in die protonierte bzw. komplexierte Form überführt wird. Dadurch kann mit dem optochemischen pH-, Kalium-, Natrium-, Calcium-, Magnesium- oder Ammonium-Sensor ohne Kontakt mit einem Kalibrationsmedium eine Kalibrationsmessung durchgeführt wird, bei der die Fluoreszenzintensität der vollständig protonierten bzw. komplexierten Form des Indikators gemessen wird.

Hierzu wird das optochemische Sensorelement mit der Ausleseeinheit verbunden und eine optische Messung in Luft oder einem anderen Gas durchgeführt. Aus dem erhaltenen Messwert wird dann eine Kalibrationspunkt des optochemischen Sensorelements ermittelt.

Die hier beschriebenen Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

## Patentansprüche

1. Optochemisches Sensorelement,
**dadurch gekennzeichnet,**
**dass** die Sensorschicht des optochemischen Sensorelements mindestens eine nicht-flüchtigen Substanz enthält, die als Radikalfänger wirken kann und die Sensorschicht in einen definierten kalibrationsfähigen Zustand überführt.

2. Optochemisches Sensorelement gemäß Anspruch 1,
**dadurch gekennzeichnet,**
**dass** das optochemische Sensorelement mittels hochenergetischer Strahlung sterilisierbar ist.

3. Optochemisches Sensorelement gemäß Anspruch 1 oder 2,
**dadurch gekennzeichnet,**
**dass** die nicht-flüchtige Substanz physiologisch verträglich ist.

4. Optochemisches Sensorelement gemäß einem der Ansprüche 1 bis 3,
**dadurch gekennzeichnet,**
**dass** die Sensorschicht als nicht-flüchtige Substanz eine nicht-flüchtigen Säure, die als Radikalfänger wirken kann, oder ein Salz einer nicht-flüchtigen Säure, die als Radikalfänger wirken kann, enthält.

5. Optochemisches Sensorelement gemäß Anspruch 4,
**dadurch gekennzeichnet,**
**dass** der Anteil der nicht-flüchtigen Säure, die als Radikalfänger wirken kann, oder des Salzes einer nicht-flüchtigen Säure, die als Radikalfänger wirken kann, an der Sensorschicht mindestens 5 Gew.-% beträgt.

6. Optochemisches Sensorelement gemäß Anspruch 5,
**dadurch gekennzeichnet,**
**dass** es sich bei dem Salz der nicht-flüchtigen Säure um das Salz des kationischen Analyten des Sensors handelt.

7. Optochemisches Sensorelement gemäß einem der Ansprüche 4 bis 6,
**dadurch gekennzeichnet,**
**dass** es sich bei der nicht-flüchtigen Säure um Ascorbinsäure handelt.

8. Optochemisches Sensorelement gemäß einem der vorherigen Ansprüche,
**dadurch gekennzeichnet,**
**dass** der optochemische Sensor durch Gamma- oder Beta- oder Röntgenstrahlung sterilisierbar ist.

9. Optochemisches Sensorelement gemäß einem der vorherigen Ansprüche,
**dadurch gekennzeichnet,**
**dass** es sich um einen Einweg-Sensorelement handelt.

10. Optochemisches Sensorelement gemäß einem der vorherigen Ansprüche,
**dadurch gekennzeichnet,**
**dass** es sich um ein optochemisches Sensorelement für einen optochemischen pH-Sensor handelt, das als nicht-flüchtige Säure Ascorbinsäure enthält.

11. Optochemisches Sensorelement gemäß einem der vorherigen Ansprüche,
**dadurch gekennzeichnet,**
**dass** es sich um ein optochemisches Sensorelement für einen optochemischen Kationen-Sensor handelt, das als Salz einer nicht-flüchtigen Säure das Salz des Kations enthält.

12. Optochemisches Sensorelement gemäß Anspruch 11,
**dadurch gekennzeichnet,**
**dass** es sich bei dem optochemischen Kationen-Sensor um einen optochemischen Kalium-Sensor handelt, der als Salz einer nicht-flüchtigen Säure Kaliumascorbat enthält.

13. Optochemisches Sensorelement gemäß Anspruch 11,
**dadurch gekennzeichnet,**
**dass** es sich bei dem optochemischen Kationen-Sensor um einen optochemischen Natrium-Sensor handelt, der als Natriumsalz einer nicht-flüchtige Säure Natriumascorbat enthält.

14. Optochemisches Sensorelement gemäß Anspruch 11,
**dadurch gekennzeichnet,**
**dass** es sich bei dem optochemischen Kationen-Sensor um einen optochemischen Calcium-Sensor handelt, der als Calciumsalz einer nicht-flüchtige Säure Calciumascorbat enthält.

15. Optochemisches Sensorelement gemäß Anspruch 11,
**dadurch gekennzeichnet,**
**dass** es sich bei dem optochemischen Kationen-Sensor um einen optochemischen Magnesium-Sensor handelt, der als Magnesiumsalz einer nicht-flüchtige Säure Magnesiumascorbat enthält.

16. Optochemisches Sensorelement gemäß Anspruch 11,
**dadurch gekennzeichnet,**
**dass** es sich bei dem optochemischen Kationen-Sensor um einen optochemischen Ammonium-Sensor handelt, der als Ammoniumsalz einer nicht-flüchtige Säure Ammoniumascorbat enthält.

17. Optochemischer Sensor,
**dadurch gekennzeichnet,**
**dass** der optochemische Sensor ein optochemisches Sensorelement gemäß einem der Ansprüche 1 bis 16 aufweist.

18. Verfahren zur Trockenkalibration des optochemischen Sensorelements eines optochemischer pH-, Kalium-, Natrium-, Calcium-, Magnesium- oder Ammonium-Sensors,
**dadurch gekennzeichnet,**
**dass** der Sensorschicht des optochemischen Sensorelements eine solche Menge im Falle eines pH-Sensors einer nicht-flüchtigen Säure oder im Falle eines Kalium-, Natrium, Calcium, Magnesium oder Ammonium-Sensors von deren Kaliumsalz, Natriumsalz, Calciumsalz, Magnesiumsalz bzw. Ammoniumsalz zugefügt wird, dass der Indikator vollständig in die protonierte bzw. komplexierte Form überführt wird, und mit dem vollständig in die protonierte bzw. komplexierte Form überführten optochemischen pH-, Kalium-, Natrium-, Calcium-, Magnesium- oder Ammonium-Sensor ohne Kontakt mit einem Kalibrationsmedium eine Kalibrationsmessung durchgeführt wird, bei der die Fluoreszenzintensität der protonierten bzw. komplexierten Form des Indikators gemessen und aus dem Messwert ein Kalibrationspunkt des optochemischen Sensorelements ermittelt wird.
